# EUROPEAN PATENT APPLICATION

(11) **EP 4 510 593 A1**
(43) Date of publication of application: **19.02.2025**
(21) Application number: 23191268.4
(22) Date of filing: 14.08.2023
(51) Int. Cl.: H04N 21/2187, G06F 3/01, H04N 21/234, H04N 21/4223, H04N 21/81, H04N 21/8545

(54) **SYSTEM AND METHOD FOR EFFICIENTLY RENDERING OF ONE OR MORE SCENES TO ONE OR MORE USERS INTERACTING IN A COMPUTER SIMULATED ENVIRONMENT**

(71) Applicant: Siemens Aktiengesellschaft, 80333 München (DE)
(72) Inventor: DEB, Pallav Kumar, 781028 Guwahati, Assam (IN); RAJ, Arun, 635110 Hosur, Tamil Nadu (IN); SINGH, Saurabh Narayan, 81739 München (DE)
(74) Representative: Horn Kleimann Waitzhofer Schmid-Dreyer Patent- und Rechtsanwälte PartG mbB

(57) **Abstract**

Disclosed is a system, apparatus, method for efficiently rendering scenes to users interacting in a computer simulated environment. The method comprises receiving, by a processing unit, visual data from data acquisition devices configured to acquire data pertaining to entities interacting in a facility; identifying scenes and the entities therein, to be rendered in computer simulated environment for a particular user; generating one or more clusters of each of the entities identified from the scenes to be rendered; assigning each cluster in the scenes to a computing device from a plurality of computing devices installed in the facility based on a device assignment model; and synchronizing each cluster of the scenes received from each of the plurality of computing devices in order to render the scenes to the users interacting in the computer simulated environment.

## Description

### TECHNICAL FIELD OF THE INVENTION

The present invention generally relates to computer simulated environments, and more specifically to a method and system for efficiently rendering of one or more scenes to one or more users interacting in a computer simulated environment using a decentralized arrangement of computing devices.

### BACKGROUND OF THE INVENTION

Industrial environments include plurality of machines or assets in an automated factory, or IoT devices interacting with one another. Industrial environments thus often include multiple interconnected components in signal communication with each other, either directly or across a network. An emerging concept complementing the rapid industrial development is "the industrial metaverse". The industrial metaverse is a next generation of fully immersive three-dimensional collaborative space that integrates multiple technical directions such as digital twin, internet of things, industrial internet, augmented reality, virtual reality, mixed reality, and the like. Metaverse is a virtual universe with shared, 3D virtual spaces where virtual assets can be owned, placed and interacted with. It also allows different users to interact with each other in the collaborative environment. These virtual assets can be simple entities like chair or table, or complex entities like industrial machinery.

For this purpose, a typical IIoT (Industrial Internet of Things) solution in a metaverse would include capturing the real-world data and then rendering the same in the industrial environment in a photorealistic manner to provide an immersive experience to the user. In an industrial environment, such as for manufacturing plants or factory floor, there are numerous machines and corresponding standard operating procedures that the operators/workers need to follow for optimum functioning of the industrial environment. The metaverse simulations can be used in such cases to schedule and train workers/operators using photorealistic rendering of scenarios and immersing them in a virtual world to create real-world experiences. For example, a manufacturing plant hosts a digital workflow for repairing a machine in a VR space. Employees log into the virtual space via VR, meet in a shared space via 3D avatars, and communicate to repair the machine together.

However, recreation of real-world objects along with their motion in real-time in a virtual environment requires resource-rich information along with adequate computing power to process and make inferences. Changes in the actual environment should be readily visible in the virtual environment in near real-time to avoid discounting critical decision windows. In the current scenarios, solutions to the above-mentioned issues are addressed using high-speed networking (5G/6G) and high-configuration GPU servers. It should also be understood that such high speed networking and high configuration GPU servers are resource and energy intensive and thereby increasing carbon footprint of such virtual environments.

An efficient, seamless and near real-time metaverse should be able to replicate the happenings in the real world in the AR/VR space. Processing them in a single device with limited compute capability (like the standalone VR hardware or IoT devices available in factory floors) is challenging as processes of recognizing, tracking, and analyzing an object are not scalable. To overcome this, a dedicated station of computing devices (GPU servers) is necessary. Additionally, such an application will eventually exceed the computing and storage (primary memory) capacity of the device, especially as the number of entities in the scene increases.

The placement of centralized systems poses the challenge for single-point failures and underperformances, leading to lags, delays, and inconsistencies in the animations of the environment and its objects. The objects' continuous movement gets hindered, and the animations start appearing to be fragmented. This significantly degrades the quality of experience and confuses the observers. Using cloud computing to solve this challenge is a potential solution, but it has its own set of challenges.

Furthermore, even with such state-of-art solutions, lags, delays, and inconsistencies are observed when rendering objects in the metaverse. Furthermore, such delays and lags are even more prominent when there are multiple participants in the scene to be rendered. It should be noted that this problem becomes more noticeable when there are network interruptions in transmission. Another challenge arises when there are several collaborators in the same virtual environment. Therefore, when continuous movements of the objects get hindered, the animations start appearing fragmented, thereby significantly degrading the quality of experience of the users in the virtual environment.

In the light of the above, there exists a need to provide a system and method for efficient rendering of one or more scenes to one or more users interacting in a computer simulated environment using a decentralized arrangement of computing devices.

### SUMMARY OF THE INVENTION

The object of the invention is to provide a system and method for efficient rendering of one or more scenes to one or more users interacting in a computer simulated environment.

The term "facility" as used herein refers to any industrial or non-industrial environment comprising one or more assets interacting therein. The term facility may refer to any building such as a factory or any type of manufacturing facility, an office building or the like, which may be populated with various entities. Herein, the term "factory" or industrial environment refers to the whole of machineries or parts thereof which cooperate to allow a production process of any kind to be carried out. Example of factory may be any industrial set-up with a plurality of assets such as a power plant, wind farm, power grid, manufacturing facility, process plants and so on. Although the present disclosure has been described generally in terms of the facility being some form of a factory floor, the term "facility" as used in the preferred embodiments and claims according to the present disclosure should be understood broadly to include not only factory floors, but also other indoor facilities and buildings such as hospitals, office spaces, apartments, complexes, schools, training centers, and so forth. The term "facility" may also include other outdoor facilities such as a parking lot, a traffic junction, and vehicles such as airplanes, ships and trucks.

The term "one or more entities" refers to specific objects, elements, components, or subjects in a facility. In an example, the facility is an industrial environment, the one or more entities maybe assets, devices, machinery, robots, equipment, assembly lines, conveyors, motors, pumps, compressors, or any other mechanical, electrical, or electronic equipment, workers, operators, supervisors, in the industrial environment. In an example, the facility is an office building, the one or more entities maybe desks, chairs, tables, cabinets, shelves, partitions, workstations, conference room furniture, lighting fixtures, or any other furniture or fixtures typically found in an office environment. Further, the one or more entities maybe equipment, or systems used in office operations, including computers, printers, scanners, copiers, telephones, projectors, audio-visual systems, networking devices, or any other technological or electronic devices commonly used in an office setting. In another example, the facility is an airplane under maintenance, the one or more entities maybe physical framework, body, or fuselage of the airplane, including wings, tail sections, landing gear, engine nacelles, cockpit, cabin, doors, windows, and any other structural components that contribute to the overall form and integrity of the aircraft, jet engines, turboprops, propellers, fuel systems, exhaust systems, thrust reversers, or any other elements involved in generating and controlling the aircraft's propulsion, electronic systems and instruments used for aircraft navigation, communication, monitoring, and control, including flight control systems, flight management systems, autopilot systems, navigation systems, communication systems, radar systems, or any other electronic devices or subsystems installed on the aircraft, seating arrangements, overhead compartments, lavatories, galley equipment, lighting systems, entertainment systems, safety equipment, passengers, pilots, crew members and so forth.

Throughout the present disclosure, the term "computer simulated environment" as used herein refers to three-dimensional (3D) representation of a real or physical world. It can be understood as a virtual world. The computer-simulated environment is accessible by a user, i.e., it is accessible from the real/physical world. This comprises data exchange between the computer-simulated environment and the real/physical world. In particular, the computer-simulated environment can be understood as the "metaverse". It is also possible to interact with the computer-simulated environment, i.e., to influence or use processes, components and/or functions in the computer-simulated environment. Therefore, processes in the computer-simulated environment may have direct influence on processes in the real/physical world, e.g., by modelling control processes virtually.

For example, it is possible that a user can access the computer-simulated environment via an interface, e.g., a virtual reality (VR) or augmented reality (AR) interface. The counterpart of the computer-simulated environment does not necessarily have to exist but can be for example a 3D model. It is also possible that physical forces and phenomena, e.g., gravity, are represented in a different way in the computer-simulated environment than in the real world, e.g., gravitational acceleration. For the purpose of this invention, the metaverse is comprised of one or more animated scenes being rendered corresponding to the plurality of entities interacting in the industrial environment.

The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The computer-simulated component further comprises data that are component-specific, e.g., sensor data of a virtual sensor, that can be retrieved for example via the access interface. An access to a computer-simulated component can for example comprise usage, modification, connection to other computer-simulated components, etc. The computer-simulated component can interact with the computer-simulated environment. For the purpose of this invention, the computer-simulated component may be one or more entities being rendered in the computer simulated collaborative environment or metaverse.

The metaverse can be realized by a hosting environment. The hosting environment can be for example be implemented as a cloud environment, an edge-cloud environment and/or on specific devices, e.g., mobile devices.

Throughout the present disclosure, the term "one or more data acquisition devices" refer to any electronic device configured for capturing, acquiring, and transmitting data from the industrial environment to the apparatus. In an embodiment, the data acquisition devices may be at least one of: a camera, an image sensor, a scanner, a digital camera, a surveillance camera, a 3D imaging device, or a combination thereof. Notably, the primary function of the data acquisition devices is to acquire visual data from the industrial environment such as the factory floor and transmit the acquired data to the apparatus for further processing. In an embodiment, the visual data comprises at least one of a static image data and dynamic image data.

The object of the invention is achieved by a method for efficient rendering of one or more scenes to one or more users interacting in a computer simulated environment. The method comprises receiving, by a processing unit, visual data from one or more data acquisition devices configured to acquire data pertaining to one or more entities interacting in a facility. Herein, the visual data is acquired from a point of view of the one or more users interacting in the computer simulated environment. The method comprises identifying, by the processing unit, one or more scenes and the one or more entities therein, to be rendered in the computer simulated environment for a particular user. The method comprises generating, by the processing unit, one or more clusters of each of the one or more entities identified from the one or more scenes to be rendered. Herein, each cluster comprises a set of entities in relation with one another. The method comprises assigning, by the processing unit, each cluster in the one or more scenes to a computing device from a plurality of computing devices installed in the facility based on a device assignment model. Herein, each of the plurality of computing devices are configured for processing the one or more clusters using one or more machine learning models. The method comprises synchronizing, by the processing unit, each cluster of the one or more scenes received from each of the plurality of computing devices in order to render the one or more scenes to the one or more users interacting in the computer simulated environment.

In an embodiment, the method further comprises generating animations from the synchronized visual data pertaining to the scene to be rendered to the particular user. Further, the method comprises rendering the generated animations to the particular user in the computer simulated environment.

In an embodiment, the method of synchronizing the clusters of the one or more scenes to be rendered comprises determining, by the processing unit, a scene association of each of the clusters transmitted from each of the plurality of computing devices based on a timestamp of each scene. Further, the method of synchronizing the clusters of the one or more scenes to be rendered comprises arranging, by the processing unit, each of the clusters in the respective scenes based on coordinates of the one or more entities in each of the clusters and the determined scene association. Further, the method of synchronizing the clusters of the one or more scenes to be rendered comprises synchronizing, by the processing unit, the one or more scenes to be rendered based on a timestamp of each scene. Herein, the one or more scenes comprises one or more associated cluster arrangement.

In an embodiment, the method of synchronizing each cluster of the one or more scenes received from each of the plurality of computing devices in order to render the one or more scenes to the one or more users interacting in the computer simulated environment comprises generating, by the processing unit, metadata for each cluster of the one or more scenes processed by the computing devices. Herein, the metadata comprises one or more parameters that define the visual data pertaining to the one or more entities in the one or more clusters. Further, the method comprises synchronizing, by the processing unit, metadata received from each of the computing devices based on an arrival time and service rate of each metadata received from the computing devices.

In an embodiment, the method of generating clusters for each of the one or more entities identified from the scene to be rendered comprise generating, by the processing unit, bounding boxes for a set of entities from the one or more entities. Herein, the set of entities are interacting with each other. Further, the method comprises determining, by the processing unit, an overlap score of the generated bounding boxes over multiple frames. Herein, the overlap score is determined based on area of overlap between one or more bounding boxes in comparison to area of union between the one or more bounding boxes. Further, the method comprises determining, by the processing unit, the frame pertaining to the set of entities with a highest value of the overlap score. Further, the method comprises generating, by the processing unit, a first set of association graphs for the set of entities having the highest overlap score. Further, the method comprises generating, by the processing unit, the one or more clusters based on the generated first set of association graphs.

In an embodiment, the method of generating clusters for each of the one or more entities identified from the scene to be rendered comprises generating, by the processing unit, bounding boxes for the set of entities from the one or more entities. Herein, the set of entities not interacting with each other. Further, the method comprises calculating, by the processing unit, relative distance score between each of the one or more bounding boxes over multiple frames. Herein, the relative distance score is the distance between the set of entities in each of the bounding boxes. Further, the method comprises determining, by the processing unit, the frame pertaining to the set of entities with a least value of the relative distance score. Further, the method comprises generating, by the processing unit, a second set of association graphs for the set of entities having the least relative distance score. Further, the method comprises generating, by the processing unit, the one or more clusters based on the generated second set of association graphs.

In an embodiment, the method of assigning each cluster to a computing device from a plurality of computing devices based on a device assignment model comprises identifying, by the processing unit, the plurality of the computing devices installed in the facility. Further, the method comprises determining, by the processing unit, configuration of each of the identified computing devices. Further, the method comprises listing, by the processing unit, each of one or more clusters to be rendered based on an order of rendering over a period of time. Further, the method comprises determining, by the processing unit, a complexity score for each cluster to be rendered. Herein, the complexity score is a metric of the complexity of processing of the one or more clusters. The method comprises determining, by the processing unit, a priority score for each of the clusters to be rendered, wherein the priority score is determined based on the complexity score and a priority of order of rendering. The method comprises assigning, by the processing unit, the cluster to be rendered to the computing device having the highest computing capability based on the highest priority score of the scene.

In an embodiment, the method of assigning each cluster to a computing device from a plurality of computing devices based on a device assignment model comprises assigning each set of clusters in the first association graph and the second association graph to a computing device based on a proximity of the user to the computing device.

In an embodiment, the method of assigning each cluster to a computing device from a plurality of computing devices based on a device assignment model comprises determining, by the processing unit, one or more new entities in a scene previously rendered in the computer simulated environment for a particular user, when the user initiates interaction with the one or more new entities in computer simulated environment. The method comprises assigning, by the processing unit, the one or more new entities to the computing device assigned for the previously rendered scene for the user.

In an embodiment, the method of assigning each cluster to a computing device from a plurality of computing devices based on an assignment model comprises determining, by the processing unit, one or more entities overlapping from respective point of views of the plurality of users collaborating in the computer simulated environment. The method comprises assigning, by the processing unit, the determined overlapping entities to a particular computing device for processing the visual data for all the plurality of users.

In an embodiment, the method of assigning each cluster to a computing device from a plurality of computing devices based on an assignment model comprise detecting, by the processing unit, a failure of the computing device during processing of the cluster assigned for processing. The method comprises determining, by the processing unit, progress of completion of the processing of the cluster assigned thereto. The method comprises assigning, by the processing unit, another computing device available in the facility capable of processing the cluster assigned thereto.

The object of the invention is also achieved by an apparatus for efficiently rendering one or more scenes to one or more users interacting in a computer simulated environment. The apparatus comprises one or more processing units, memory communicatively coupled to the one or more processing units. The memory comprises a module stored in the form of machine-readable instructions executable by the one or more processing units. The module is configured to perform the aforementioned method steps.

The object of the invention is also achieved by a system for efficiently rendering one or more scenes to one or more users in a computer simulated environment. The system comprises a computer simulated collaborative environment rendering one or more scenes corresponding to real-world entities in a facility. The system comprises a plurality of computing device communicatively coupled to the computer simulated environment. Herein, the plurality of computing devices are installed in the facility. The apparatus is communicatively coupled to the plurality of computing devices and the computer simulated collaborative environment. The apparatus is configured for efficiently rendering one or more scenes to one or more users interacting in the computer simulated environment according to the aforementioned method steps.

The object of the invention is also achieved by a computer program product comprising machine readable instructions, that when executed by one or more processing units, cause the one or more processing units to perform the aforementioned method steps.

The object of the present invention is further achieved by a computer readable medium on which program code sections of a computer program are saved, the program code sections being loadable into and/or executable in a system to make the system execute the method steps described above when the program code sections are executed in the system. This summary is provided to introduce a selection of concepts in a simplified form that are further described below in the following description. It is not intended to identify features or essential features of the claimed subject matter. Furthermore, the claimed subject matter is not limited to implementations that solve any or all disadvantages noted in any part of this invention.

### BRIEF DESCRIPTION OF EMBODIMENTS

The present invention is further described hereinafter with reference to illustrated embodiments shown in the accompanying drawings, in which:
FIG 1A is a block diagram of a system for efficient rendering of one or more scenes to one or more users interacting in a computer simulated environment, according to an embodiment of the present invention;
FIG 1B is an exemplary illustration of an avatar viewing the one or more scenes in the computer simulated environment, according to an embodiment of the present invention;
FIG 2 is a block diagram of an exemplary apparatus for efficient rendering of one or more scenes to one or more users interacting in a computer simulated environment, according to an embodiment of the present invention;
FIG 3 is a flowchart depicting steps of a method for efficient rendering of one or more scenes to one or more users interacting in a computer simulated environment, according to an embodiment of the present invention;
FIG 4A is a flowchart depicting steps of a method for generating one or more clusters for the one or more entities interacting with one another, according to an embodiment of the present invention;
FIG 4B is an exemplary representation of one or more clusters for the one or more entities interacting with one another, according to an embodiment of the present invention;
FIG. 5 is a flowchart depicting steps of a method for generating one or more clusters for the one or more entities not interacting with one another, according to an embodiment of the present invention, according to another embodiment of the present invention;
FIG 5B is an exemplary representation of one or more clusters for the one or more entities not interacting with one another, according to an embodiment of the present invention;
FIG 6 is a flowchart depicting steps of a method for assigning each cluster to a computing device for processing, according to an embodiment of the present invention;
FIG 7 is a flowchart depicting a workflow of method of synchronizing one or more clusters received from the computing devices, according to an embodiment of the present invention; and
FIG 8 is a flowchart depicting a workflow of the method for efficient rendering of one or more scenes to one or more users interacting in a computer simulated environment, according to an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details.

### DETAILED DESCRIPTION OF EMBODIMENTS

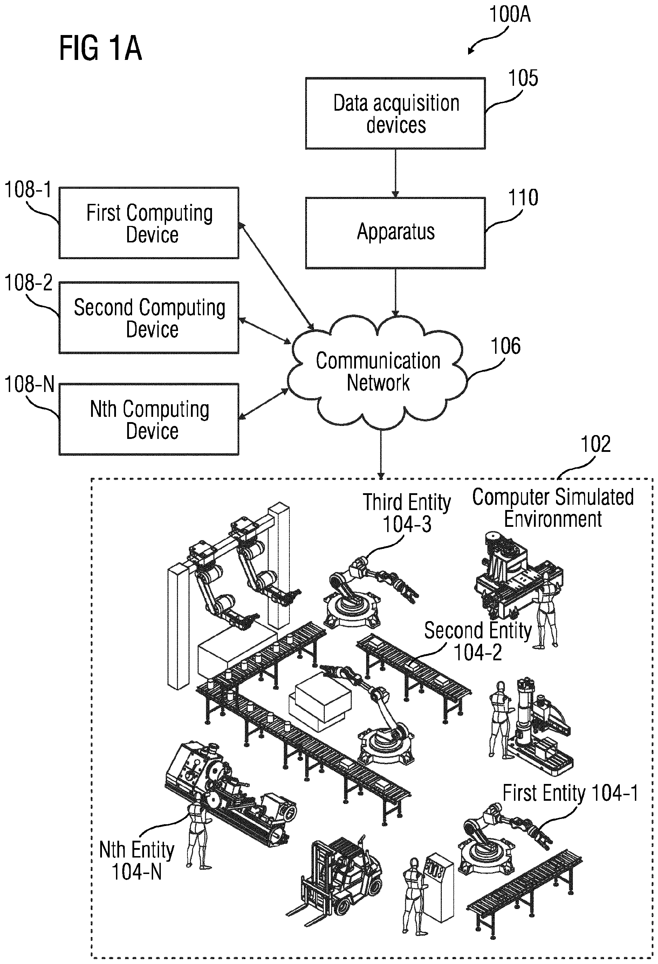

FIG 1A is a block diagram of a system 100A for efficient rendering of one or more scenes to one or more users interacting in a computer simulated environment. The system 100A comprises a computer simulated environment 102, one or more entities 104-1 to 104-N being rendered in the computer simulated environment 102, one or more data acquisition devices 105, a plurality of computing devices 108-1 to 108-N, an apparatus 110, communicating over a communication network 106. The computer simulated environment 102 three-dimensional (3D) representation of a real or physical world. It can be understood as a virtual world representing one or more entities 104-1 to 104-N of the real-world entities in a facility. The term "facility" as used herein refers to any industrial or non-industrial environment comprising one or more assets interacting therein. The term facility may refer to any building such as a factory or any type of manufacturing facility, an office building or the like, which may be populated with various entities. Herein, the term "factory" or industrial environment refers to the whole of machineries or parts thereof which cooperate to allow a production process of any kind to be carried out. Example of factory may be any industrial set-up with a plurality of assets such as a power plant, wind farm, power grid, manufacturing facility, process plants and so on. Although the present disclosure has been described generally in terms of the facility being some form of a factory floor, the term "facility" as used in the preferred embodiments and claims according to the present disclosure should be understood broadly to include not only factory floors, but also other indoor facilities and buildings such as hospitals, office spaces, apartments, complexes, schools, training centers, and so forth. The term "facility" may also include other outdoor facilities such as a parking lot, a traffic junction, and vehicles such as airplanes, ships and trucks.

The term "one or more entities" 104-1 to 104-N refers to specific objects, elements, components, or subjects in a facility. In an example, the facility is an industrial environment, the one or more entities 104-1 to 104-N maybe assets, devices, machinery, robots, equipment, assembly lines, conveyors, motors, pumps, compressors, or any other mechanical, electrical, or electronic equipment, workers, operators, supervisors, in the industrial environment. In an example, the facility is an office building, the one or more entities 104-1 to 1-4-N maybe desks, chairs, tables, cabinets, shelves, partitions, workstations, conference room furniture, lighting fixtures, or any other furniture or fixtures typically found in an office environment. Further, the one or more entities maybe equipment, or systems used in office operations, including computers, printers, scanners, copiers, telephones, projectors, audio-visual systems, networking devices, or any other technological or electronic devices commonly used in an office setting. In another example, the facility is an airplane under maintenance, the one or more entities 104-1 to 104-N maybe physical framework, body, or fuselage of the airplane, including wings, tail sections, landing gear, engine nacelles, cockpit, cabin, doors, windows, and any other structural components that contribute to the overall form and integrity of the aircraft, jet engines, turboprops, propellers, fuel systems, exhaust systems, thrust reversers, or any other elements involved in generating and controlling the aircraft's propulsion, electronic systems and instruments used for aircraft navigation, communication, monitoring, and control, including flight control systems, flight management systems, autopilot systems, navigation systems, communication systems, radar systems, or any other electronic devices or subsystems installed on the aircraft, seating arrangements, overhead compartments, lavatories, galley equipment, lighting systems, entertainment systems, safety equipment, passengers, pilots, crew members and so forth.

The one or more entities 104-1 to 104-N are captured using one or more data acquisition devices 106 and then rendered on the computer simulated environment 102. The one or more data acquisition devices 106 maybe any electronic device configured for capturing, acquiring, and transmitting data from the industrial environment to the apparatus 110. In an embodiment, the data acquisition devices may be at least one of: a camera, an image sensor, a scanner, a digital camera, a surveillance camera, a 3D imaging device, or a combination thereof. Notably, the primary function of the data acquisition devices is to acquire visual data from the industrial environment such as the factory floor and transmit the acquired data to the apparatus 110 for further processing. In an embodiment, the visual data comprises at least one of a static image data and dynamic image data.

The computer-simulated environment 102 is accessible by a user, i.e., it is accessible from the real/physical world. In particular, the computer-simulated environment 102 can be understood as the "metaverse". It is also possible to interact with the computer-simulated environment 102, i.e., to influence or use processes, components and/or functions in the computer-simulated environment 102. The user or the avatar may interact with the entities rendered in the metaverse.

For example, it is possible that a user can access the computer-simulated environment 102 via an interface, e.g., a virtual reality (VR) or augmented reality (AR) interface. For the purpose of this invention, the metaverse is comprised of one or more animated scenes being rendered corresponding to the plurality of entities interacting in the facility. The metaverse may comprise a plurality of computer-simulated components. The computer simulated components can for example be understood as a representation, in particular a 3D representation, of a real or physical component. A component can for example be a room, a building, an item, or an object. The computer-simulated component can have different functionalities/features, e.g., an access interface. The metaverse can be realized by a hosting environment. The hosting environment can be for example be implemented as a cloud environment, an edge-cloud environment and/or on specific devices, e.g., mobile devices.

In one embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 106, for example, the internet. The cloud computing environment provides on-demand network access to a shared pool of the configurable computing physical and logical resources. The apparatus 110 may include a module for efficient rendering of one or more scenes to one or more users interacting in a computer simulated environment.

Particularly, the system 100 comprises a cloud computing device configured for efficient rendering of one or more scenes to one or more users interacting in a computer simulated environment. The cloud computing device comprises a cloud communication interface, a cloud computing hardware and OS, and a cloud computing platform. The cloud computing hardware and OS may include one or more servers on which an operating system (OS) is installed and includes one or more processing units, one or more storage devices for storing data, and other peripherals required for providing cloud computing functionality. The cloud computing platform is a platform which implements functionalities such as data storage, data analysis, data visualization, data communication on the cloud hardware and OS via APIs and algorithms; and delivers the aforementioned cloud services using cloud-based applications.

Throughout the present disclosure, the term "computing devices" 108-1 to 108-N (namely, the first computing devices 108-1, second computing device 108-2 and Nth computing device 108-N) refers to a computer (system), a client, a smartphone, a device or a server that are in each case arranged in the facility capable of performing one or more functions, such as processing the visual data using one or more machine learning models. In certain implementations, the computing device may be a physical or virtual device. In many implementations, the computing device may be any device capable of performing operations, such as a dedicated processor, a portion of a processor, a virtual processor, a portion of a virtual processor, portion of a virtual device, or a virtual device. In some implementations, a processor may be a physical processor or a virtual processor. In some implementations, a virtual processor may correspond to one or more parts of one or more physical processors. In some implementations, the instructions/logic may be distributed and executed across one or more processors, virtual or physical, to execute the instructions/logic. The computing devices maybe arranged in the facility which is being rendered in the metaverse. Advantageously, the computing devices arranged in a decentralized manner makes sure that processing of the visual data is distributed amongst the computing devices as per the availability and computing power of the edge devices. In a preferred embodiment, the computing devices are configured to execute one or more machine learning models for object detection, activity recognition, posture tracking, object tracking, face recognition and other computer vision techniques.

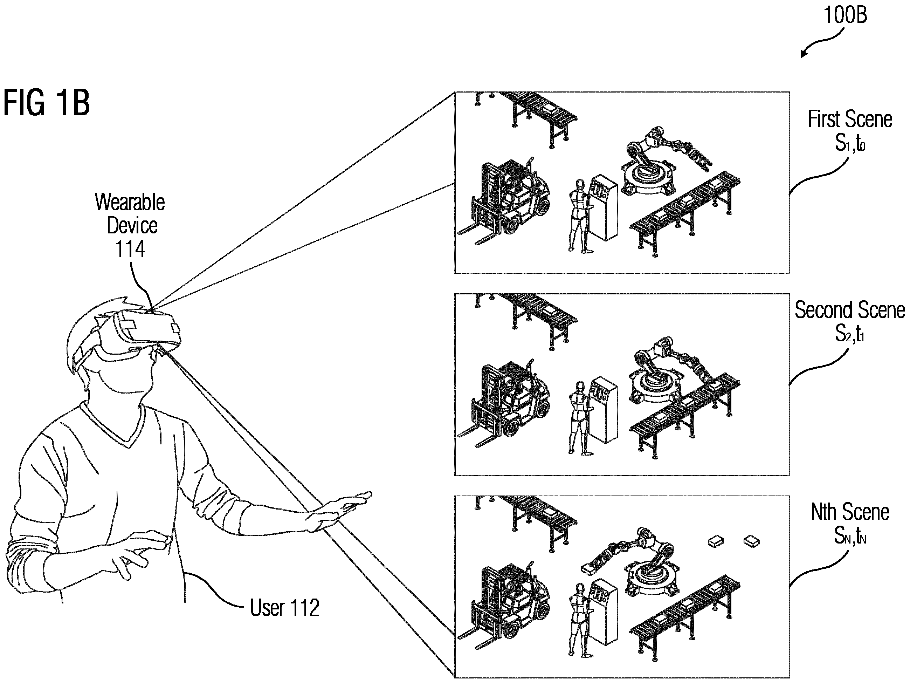

FIG 1B is an exemplary illustration 100B of a user viewing the one or more scenes in the computer simulated environment, according to an embodiment of the present invention. As maybe seen, the user 112 is equipped with a wearable device 114 configured for visualization of one or more scenes S1, S2, ... SN in the computer simulated environment 102 with respect to time t0, t1, and tN respectively. In an example, the wearable device 114 comprises a display module that presents visual information to the user, rendering one or more entities, a realistic and immersive manner. The display module may include a high-resolution screen, holographic display, augmented reality (AR) glasses, or any other suitable technology for visually presenting virtual content to the user 112. Additionally, the wearable device 114 incorporates a tracking system to capture the user's movements and gestures, allowing for real-time interaction and navigation within the metaverse. The tracking system may utilize sensors, cameras, motion trackers, or any other suitable means of capturing and interpreting user movements. Furthermore, the wearable device 114 includes connectivity features to facilitate communication and data exchange with the metaverse infrastructure. These features may include wireless communication capabilities, such as Wi-Fi, Bluetooth, or cellular connectivity, enabling the wearable device to connect to the metaverse platform, retrieve asset data, and transmit user actions or preferences. The wearable device 114 may also incorporate input mechanisms, such as touch-sensitive surfaces, buttons, voice recognition, or motion sensors, allowing users to provide commands, make selections, or manipulate virtual assets within the metaverse environment. The wearable device 114 for visualizing assets in the metaverse is designed to enhance the user's experience and immersion in the virtual world. It enables users to perceive, interact with, and navigate through virtual assets, objects, and environments seamlessly, thereby providing a novel and immersive way to explore and visualize digital content within the metaverse.

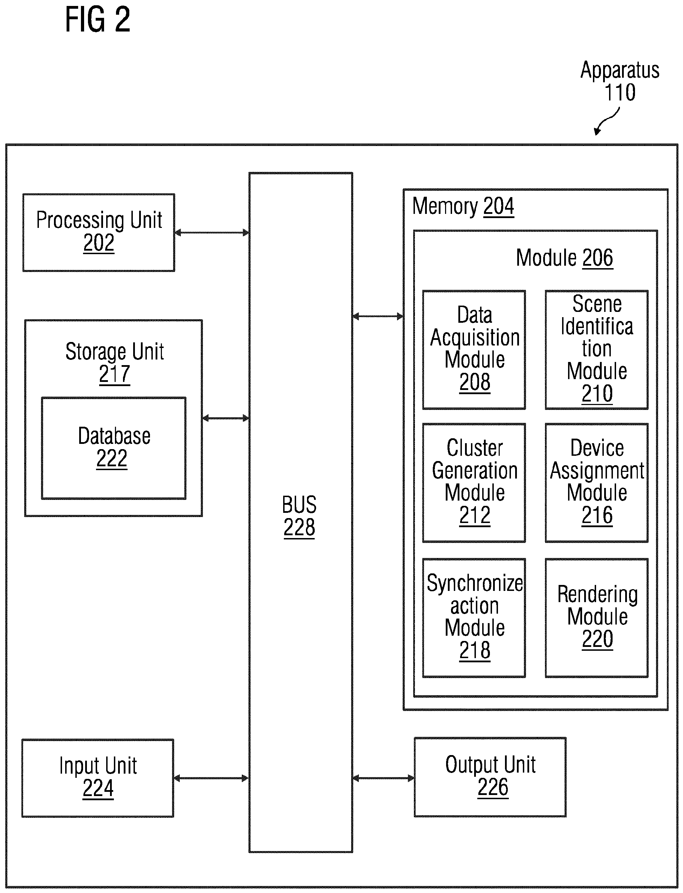

FIG 2 is a block diagram of an exemplary apparatus 110 for is a block diagram of an exemplary apparatus for efficient rendering of one or more scenes to one or more users interacting in a computer simulated environment, according to an embodiment of the present invention. In an exemplary embodiment, the apparatus 110 is communicatively coupled to the computer simulated environment 102 rendering one or more entities 104-1 to 104-N, the one or more data acquisition devices 105, and the one or more computing devices 108-1 to 108-N.

The apparatus 110 may be a personal computer, a laptop computer, a tablet, a server, a virtual machine, and the like. The apparatus 110 includes a processing unit 202, a memory 204 comprising a module 206, a storage unit 217 comprising a database 222, an input unit 224, an output unit 226 and a bus 228.

The processing unit 202 as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 202 may also include embedded controllers, such as generic or programmable logic devices or arrays, application specific integrated circuits, single-chip computers, and the like.

The memory 204 may be non-transitory volatile memory and/or nonvolatile memory. The memory 204 may be coupled for communication with the processing unit 202, such as being a computer-readable storage medium. The processing unit 202 may execute instructions and/or code stored in the memory 204. A variety of computer-readable instructions may be stored in and accessed from the memory 204. The memory 204 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

In the present embodiment, the memory 204 includes the module 206 stored in the form of machine-readable instructions on any of the above-mentioned storage media and may be in communication to and executed by the processing unit 202. When the machine-readable instructions are executed by the processing unit 202, the module 206 causes the processing unit 202 to efficiently render one or more scenes to one or more users interacting in the computer simulated environment.

The module 206 further comprises a data acquisition module 208, scene identification module 210, cluster generation module 212, device assignment module 216, synchronization module 218, and rendering module 220.

The data acquisition module 208 is configured for acquiring visual data from the industrial environment. The data acquisition module 208 is configured for acquiring data pertaining to the one or more entities 104-1 to 104-N interacting in the industrial environment from the point of view of a particular user 112. The data acquisition module 208 is configured for acquiring data in one or more formats that may comprises at least one of a static image data, dynamic image data, signal data and acoustic data. The data acquisition module 208 is configured for pre-processing of data recevied from the one or more data acquisition devices. The data acquisition module 208 is configured for acquiring visual data from the data acquisition devices such as image sensors, camera modules, digital cameras, surveillance cameras, aerial imaging devices, 3D imaging devices, thermal imaging devices, wearable cameras and the like.

The scene identification module 210 is configured for identifying one or more real-world scenes from the industrial environment in real-time. The scene identification module 210 is configured for identifying scenes from the visual data recevied from the data acquisition module 208. The scene identification module 210 is configured for identifying the one or more scenes from the point of view of the particular avatar. It should be understood that the entire industrial environment is not processed and rendered at the same time, rather the scene identification module is configured to determine one or more scenes over a few frames to be rendered from the point of view of the user at a given instant of time.

The cluster generation module 212 is configured for generating one or more clusters of each of one or more entities identified from the one or more scenes to be rendered. Each cluster comprises a set of entities in relation with one another. The cluster generation module 212 is configured for generating clusters for the one or more entities that are interacting with each other. The cluster generation module 212 is configured for generating clusters for the one or more entities that are not interacting with each other. The cluster generation module 212 is configured for generating the clusters for one or more entities based on association graphs generated based on relationship between the one or more entities.

The device assignment module 216 is configured for assigning each cluster in the one or more scenes to a computing device from a plurality of computing devices installed in the facility based on a device assignment model. The device assignment module 216 is configured for identifying a configuration of each of the computing devices in the facility. Further, the device assignment module 216 is configured for determining a complexity score of the one or more scenes based on time required and complexity processing the scene. Further, the device assignment module 216 is then configured for assigning the one or more clusters to the computing devices based on the configuration of the computing devices and the complexity of the one or more scenes to be rendered.

The synchronization module 218 is configured for synchronizing each cluster of the one or more scenes received from each of the plurality of computing devices in order to render the one or more scenes to the one or more scenes interacting in the computer simulated environment. The synchronization module 218 is configured for determining the association of each cluster transmitted from the computing devices to a particular scene. The synchronization module 218 is configured for arranging each of the clusters in the respective scenes based on coordinates of the one or more entities in each of the clusters. Further, the synchronization module 218 is configured for synchronizing the one or more scenes to be rendered based on a timestamp of each scene.

The rendering module 220 is configured for generating animations from the synchronized visual data pertaining to the scene to be rendered to a particular user. Furthermore, the rendering module 220 is configured for rendering the generated animations to the particular user in the computer simulated environment.

The processing unit 202 is configured for performing all the functionality of the module 206. The processing unit 302 is configured for receiving visual data from one or more data acquisition devices configured to acquire data pertaining to one or more entities interacting in a facility. The visual data is acquired from a point of view of the one or more avatars interacting in the computer simulated environment. The processing unit 304 is configured for identifying one or more scenes to be rendered and one or more entities therein from the point of view of a particular user in the computer simulated environment. The processing unit 302 is configured for generating one or more clusters of each of the one or more entities identified from the one or more scenes to be rendered. Each cluster comprises a set of entities in relation with one another. The processing unit 302 is configured for assigning each cluster in the one or more scenes to a computing device from a plurality of computing devices installed in the facility based on a device assignment model. Each of the plurality of computing devices are configured for processing the visual data using one or more machine learning models. The processing unit 302 is configured for synchronizing each cluster of the one or more scenes received from each of the plurality of computing devices in order to render the one or more scenes to the one or more users interacting in the computer simulated environment.

The storage unit 318 comprises the database 320 for storing first knowledge graph and second knowledge graph. The storage unit 318 and/or database 320 may be provided using various types of storage technologies, such as solid state drives, hard disk drives, flash memory, and may be stored in various formats, such as relational databases, non-relational databases, flat files, spreadsheets, and extended markup files, etc.

The input unit 322 may provide ports to receive input from input devices such as keypad, touch-sensitive display, camera (such as a camera receiving gesture-based inputs), etc. capable of receiving set of requirements for generating scenes of a particular area in a factory floor, factory floor models details for storage in the first knowledge graph, worker behavior model details for storage in the second knowledge graph etc. The display unit 324 may provide ports to output data via output device with a graphical user interface for displaying one or more scenes in the computer simulated virtual environment. The bus 326 acts as interconnect between the processing unit 302, the memory 304, the storage unit 318, the input unit 322, and the display unit 324.

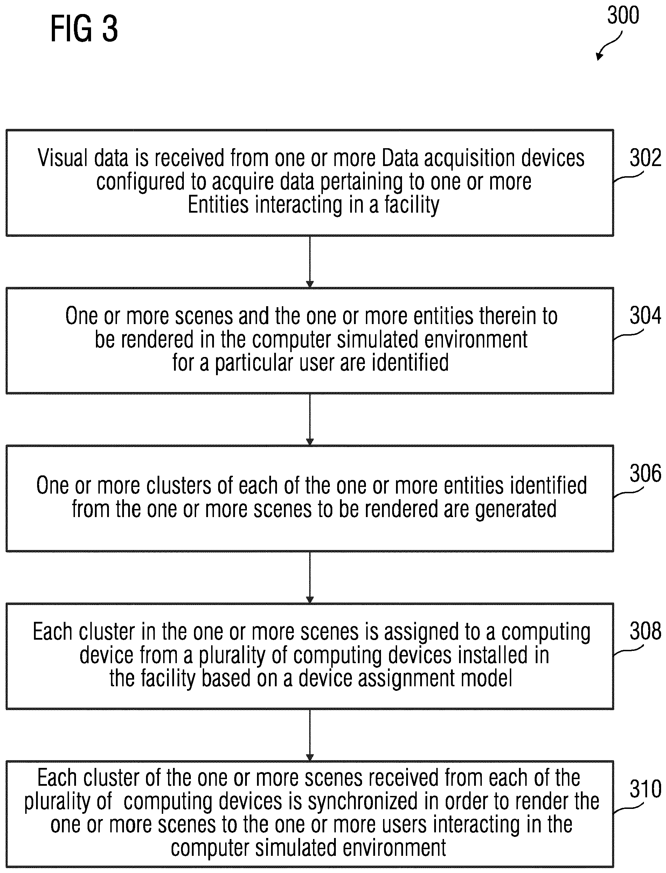

Those of ordinary skilled in the art will appreciate that the hardware depicted in FIG 3 may vary for particular implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter also may be used in addition to or in place of the hardware depicted. The depicted example is provided for the purpose of explanation only and is not meant to imply architectural limitations with respect to the present disclosure.

FIG 3 is a flowchart depicting steps of a method 300 for efficiently rendering one or more scenes in a computer simulated environment, according to an embodiment of the present invention.

At step 302, visual data is received from one or more data acquisition devices configured to acquire data pertaining to one or more entities interacting in a facility. The visual data is acquired from a point of view of the one or more users interacting in the computer simulated environment.

The data acquisition devices 105 are electronic device configured for capturing, acquiring, and transmitting data from the industrial environment to the apparatus 110. In an embodiment, the data acquisition devices may be at least one of: a camera, an image sensor, a scanner, a digital camera, a surveillance camera, a 3D imaging device, or a combination thereof. Notably, the primary function of the data acquisition devices is to acquire visual data from the industrial environment such as the factory floor and transmit the acquired data to the apparatus 110 for further processing. In an embodiment, the visual data comprises at least one of a static image data and dynamic image data.

In an exemplary implementation, the data acquisition device 105 is a camera configured to capture still image data and/or video image data of the one or more entities in the facility. The term "camera" is understood to represent anything from one camera to a group of cameras arranged in a suitable configuration and outputting one or more video feeds of corresponding covered areas of the industrial environment. In an example, the data acquisition device may be located in the facility; for example, the cameras may be disposed throughout the industrial environment, mounted at various locations therein. In another example, the data acquisition device may be integrated in an aerial vehicle; for example, the cameras may be mounted on a body of a drone and pointing to various directions therefrom to cover different areas of the industrial environment or pointing at a particular entitiy based on a set of requirements.

In another exemplary implementation, the data acquisition devices 105 are surveillance cameras used for security and monitoring purposes. The surveillance cameras are designed to capture and record images or videos of specific areas or premises. Surveillance cameras may include features like night vision capabilities, motion detection, remote monitoring, and video analytics for intelligent video processing.

In another exemplary implementation, the data acquisition devices 105 are 3D imaging devices that capture depth information along with visual imagery, enabling the creation of three-dimensional representations of objects or scenes. Such devices may use technologies like structured light, time-of-flight, stereo vision, or LiDAR (Light Detection and Ranging) to acquire 3D data.

In another exemplary implementation, the data acquisition devices 105 are thermal imaging devices that capture infrared radiation emitted by assets in the factory floor to generate images based on temperature differences. Notably, this would provide additional information for quality scene generation during night or low-light conditions.

In another exemplary, implementation the data acquisition devices 105 are wearable cameras that may be arranged on body of the workers/operator in order to enable system to capture visual data of the assets, machines or an activity being performed from the perspective of the workers/operators on the factory floor. Advantageously, the system can switch between different views when rendering the one or more scenes providing a more immersive experience to an avatar in the metaverse.

It should be understood that the data acquisition devices 105 are configured to acquire visual data from the point of view of the user viewing particular scenes in the metaverse. In an example, when a user or an avatar in metaverse is walking down a path in the metaverse, the point of view of the user may be a portion/area of the factory floor, which is detected in the metaverse and corresponding portion/area is acquired from the real-world factory floor to rendered in the metaverse as the point of view of the user is changed with respect to movement of the user.

At step 304, one or more scenes and the one or more entities 104-1 to 104-N therein to be rendered are identified in the computer simulated environment 102 for a particular user 112. The real-world scenes are identified from the facility based on point of view of the particular user 112. It should be understood that the one or more scenes are identified from the point of view of the user 112 viewing particular scenes (S1 to SN) in the metaverse. In an example, when a user 112 or an avatar in metaverse is walking down a path in the metaverse, the point of view of the user may be a portion/area of the factory floor, which is detected in the metaverse and corresponding one or more scenes from the portion/area is identified to be rendered.

The real-world scene maybe identified from the facility in real-time. The real-world scene is identified using image processing techniques on the recevied visual data. The acquired visual data such as images and video data may undergo preprocessing steps to enhance the quality of the images or to remove noise or artifacts. Preprocessing techniques may include noise reduction, image filtering, color correction, or image enhancement algorithms. Further, the method involves extracting relevant features from the acquired images. Features can be various visual descriptors such as color, texture, shape, edges, or key points. These features are derived to represent distinctive characteristics of objects, scenes, or patterns within the images. The extracted features are then used to analyze the scene and identify one or more entities within it. Further, the entities can be identified using object detection algorithms within the scene, such as machines, conveyor belts, motors, levers, boxes, trolleys, robots, sensors, actuators, operators, workers, etc. This can be achieved using object recognition algorithms, machine learning techniques, or pattern matching approaches.

Further, the visual data is meaningful regions or segments based on their visual characteristics. This can involve classifying each pixel or region into different categories, such as asset area, fire assembly area, conveyor belt area, and the like. The method further comprises employing on or more machine learning algorithms for scene classification of the visual data. Assigning a label or category to the entire scene based on its overall content. The method includes training machine learning models to recognize and classify scenes based on predefined categories, such as machine area, storage area, packing area, electrical area, etc. It should be understood that once the one or more entities are identified and analyzed, the method comprises recognizing or classifying the scene based on the identified one or more entities in the scene. This can involve comparing the extracted features with a database of known scenes or using machine learning algorithms to match the scene characteristics with predefined scene categories. In an example, the method comprises performing object detection on the scene using a computer vision-based object detection model. This model will identify and locate different entities (objects) present in the scene. Object detection algorithms, such as YOLO (You Only Look Once), SSD (Single Shot Multibox Detector), or Faster R-CNN (Region-based Convolutional Neural Networks), can be utilized for this purpose.

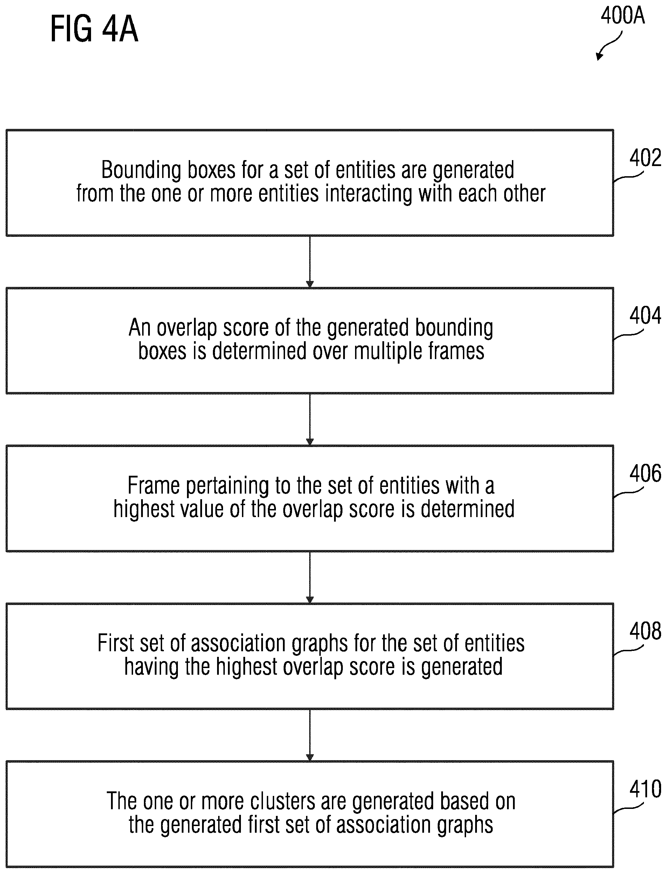

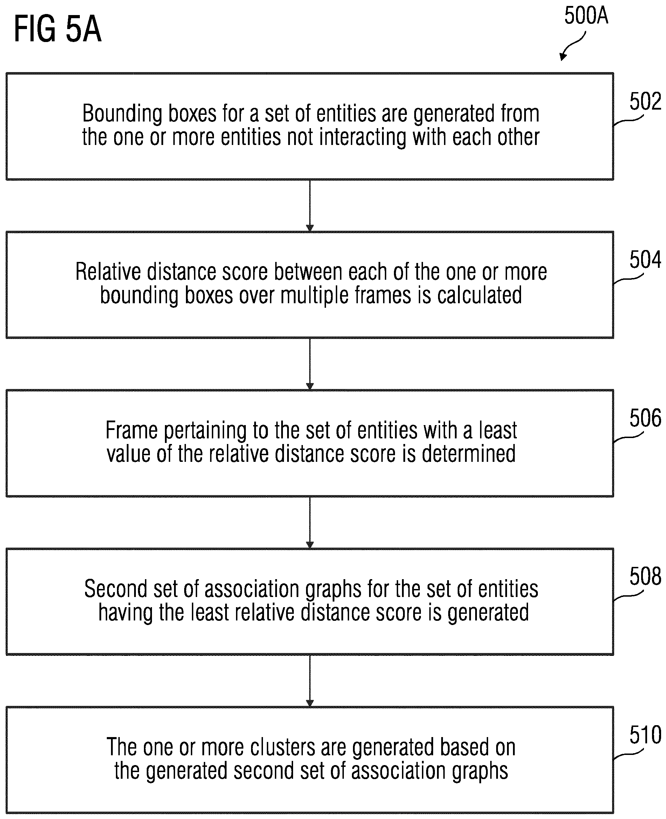

At step 306, one or more clusters of each of the one or more entities 104-1 to 104-N identified from the one or more scenes to be rendered are generated. Herein, each cluster comprises a set of entities 104-1 to 104-N in relation with one another. The one or more clusters can be understood as a group of entities identified from the one or more scenes. Once the objects have been detected (as mentioned in step 304), the coordinates or bounding boxes of each entity in the scene are obtained. These bounding boxes define the position and size of the detected entities within the image or frame. Further, the method comprises analyzing the overlapping areas among the bounding boxes of the detected entities. Bounding boxes that have significant overlaps or intersect with each other are likely part of the same cluster or group. In order to create clusters of entities, a clustering algorithm is applied to group the overlapping bounding boxes. In an example, various clustering algorithms can be used, such as hierarchical clustering, k-means clustering, or DBSCAN (Density-Based Spatial Clustering of Applications with Noise). The clustering algorithm assigns each bounding box to a specific cluster based on its overlapping patterns with other bounding boxes. Bounding boxes that do not have significant overlaps with any other bounding boxes may be treated as individual entities or form smaller clusters. After initial clustering, post-processing steps may be applied to refine the clusters. For example, overlapping clusters may be merged, and noise or outliers may be removed to ensure accurate and coherent cluster formation. In an embodiment, the one or more clusters are generated based association graphs created for the one or more identified entities in the one or more scenes. Subsequently, the one or more clusters are generated based on the association graphs. Such a method is explained further in detail in FIGs 4A -4B and FIGs 5A-5B.

At step 308, each cluster in the one or more scenes is assigned to a computing device from a plurality of computing devices installed in the facility based on a device assignment model. Each of the plurality of computing devices 108-1 to 108-N are configured for processing the visual data using one or more machine learning models. In general, the "computing device" in connection with embodiments of the present may be understood to mean for example a computer (system), a client, a smartphone, a device or a server that are in each case arranged in the facility capable of performing one or more functions, such as processing the visual data using one or more machine learning models.

In certain implementations, the computing device 108-1 to 108-N may be a physical or virtual device. In many implementations, the computing device may be any device capable of performing operations, such as a dedicated processor, a portion of a processor, a virtual processor, a portion of a virtual processor, portion of a virtual device, or a virtual device. In some implementations, a processor may be a physical processor or a virtual processor. In some implementations, a virtual processor may correspond to one or more parts of one or more physical processors. In some implementations, the instructions/logic may be distributed and executed across one or more processors, virtual or physical, to execute the instructions/logic.

In a preferred embodiment, the one or more computing devices 108-1 to 108-N are edge devices deployed in the facility. Therefore, the term "edge devices" and "computing devices" are interchangeably used hereinafter. The edge devices are characterized by their capability to perform localized data processing and analysis, reducing the need for extensive data transmission to centralized cloud servers or data centres. By operating at the edge of the network, these devices efficiently handle data near the point of origin or consumption, minimizing latency, bandwidth utilization, and dependency on remote computing resources. The edge devices may include various electronic devices such as sensors, gateways, microcontrollers, embedded systems, mobile devices, smart appliances, or any other computing devices deployed in the facility. The disclosed invention further encompasses communication modules and protocols enabling seamless integration and interaction with other components of the network infrastructure. These communication features facilitate data exchange, control signals, or other forms of data interaction between the edge devices and central systems or other edge devices. Advantageously, the localized processing capabilities of the edge devices allow for real-time or near-real-time processing of visual data, enabling efficient rendering and enhancing overall system efficiency. Furthermore, the invention encompasses the ability of the edge devices to adapt to dynamic network conditions, scale resources as needed, and optimize their operations to suit computational requirements.

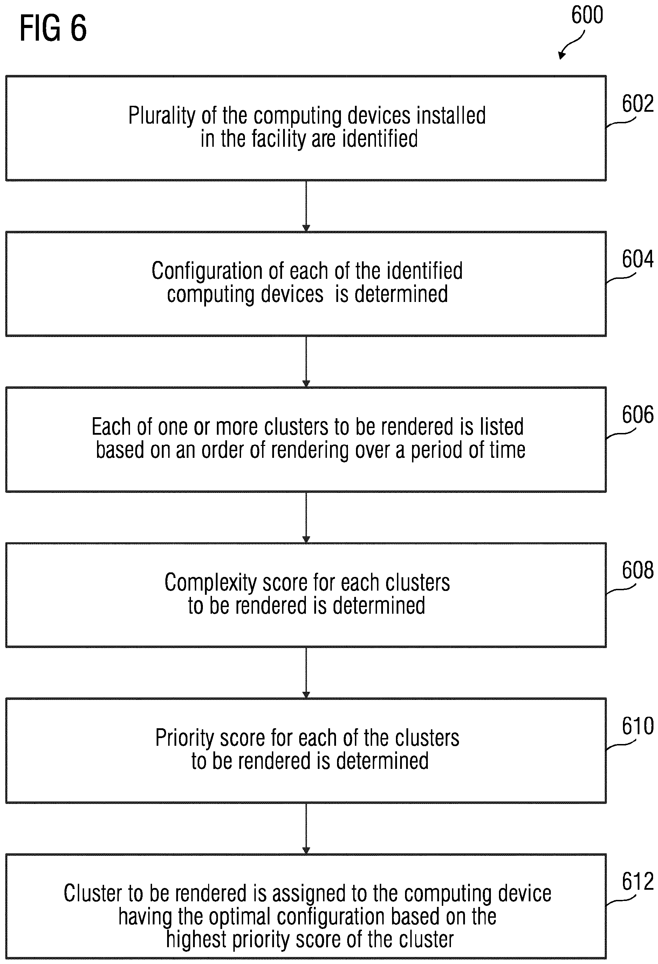

In the context of the present invention, the method comprises assigning the one or more clusters to computing device from a plurality of computing devices 108-1 to 108-N installed in the facility based on a device assignment model. It should be understood that the assignment model may assign the computing devices 108-1 to 108-N based on several factors such as computational power of the computing devices, availability of the computing device, proximity of the computing device to the user etc. The functionality of the assignment model is described in greater detail in FIG 6.

FIG 6 is a flowchart depicting steps of a method 600 for assigning each cluster to a computing device 108-1 to 108-N for processing, according to an embodiment of the present disclosure. The method comprises assigning one or more clusters to a computing device from a plurality of computing devices 108-1 to 108-N based on an assignment model. The assignment model is run on the processing unit 202. In an embodiment, the assignment model is based on asset of rules. In another embodiment, the assignment model is based on a machine learning model trained for accurately assigning the computing devices for processing of one or more clusters of the visual data to be rendered. At step 602, the plurality of the computing devices 108-1 to 108-N installed in the facility are identified. The facility maybe scanned for identification of computing devices 108-1 to 108-N capable of performing the said processing of visual data. In an exemplary implementation, the computing devices are edge devices that are identified in the facility after scanning. At step 604, configuration of each of the identified computing devices 108-1 to 108-N is determined. In an example, the computing devices are edge device, and hence the configuration of each of the edge devices is determined. The determination of configuration of edge devices comprises identifying the operational parameters, settings, and functionalities of individual edge devices or a network of interconnected edge devices. The configuration provides details on how the edge devices are connected, what software and hardware components they utilize, and how they interact with the network and other devices. Firstly, information about each device's type, model, and unique identifiers (e.g., MAC addresses or serial numbers) is determined. Furthermore, the device specifications such as processing power, memory capacity, storage, operating system, and any specialized hardware components or accelerators is determined. Furthermore, software configuration such as software running on each edge device, including the operating system version, firmware, drivers, and any specific applications or services installed is also identified. Furthermore, networking settings of the edge devices, such as IP addresses, subnet masks, gateway addresses, DNS configurations, and whether they use wired or wireless connections is determined. Furthermore, data storage and management policies such as information about local storage capacity, data retention policies, data synchronization, and backup strategies is also determined.

At step 606, each of one or more clusters to be rendered are listed based on an order of rendering over a period of time. At step 608, a complexity score for each cluster to be rendered is determined. Herein, complexity score is a metric of the complexity of processing of the one or more clusters. The complexity score of the clusters to be rendered maybe based on the number of entities in the clusters, the type of entities in the clusters, geometries of the entities, textures of the entities, lighting and shadows of the entities, transparency and reflections in the entities, resolution of the entities to be rendered, and so forth. At step 610, a priority score for each of the cluster to be rendered is determined. Herein, the priority score is determined based on the complexity score and a priority of order of rendering. At step 612, the clusters to be rendered are assigned to the computing device having the optimal configuration based on the highest priority score of the scene. In case the most optimal computing device is not available, the cluster is the assigned to the next optimal computing device.

In an embodiment, the method of assigning each cluster to a computing device from a plurality of computing devices 108-1 to 108-N based on a device assignment model comprises assigning each cluster to a computing device based on a proximity of the user to the computing device. In an example, if the user is near a conveyor belt viewing the operations of the conveyor belt, then the edge device physically closest to the conveyor belt is selected for processing the one or more clusters in the scenes to be rendered.

In another embodiment, the method of assigning each cluster to a computing device from a plurality of computing devices 108-1 to 108-N based on a device assignment model comprises determining one or more new entities in a scene previously rendered in the computer simulated environment 102 for a particular user 112, when the user initiates interaction with the environment. Further, the method comprises assigning the one or more new entities to the computing device assigned for the previously rendered scene for the user 112. In an example, when the user 112 is rendered a scene of a conveyor belt operation including the conveyor belt, the workers, the boxes moving on the conveyor belt etc. and the user 112 starts interacting with one or more boxes, then the image data pertaining to the position of the boxes as per the user actions are provided to the same edge device that had rendered the original scene.

In another embodiment, the method of assigning each cluster to a computing device from a plurality of computing devices 108-1 to 108-N based on a device assignment model comprises determining one or more entities 104-1 to 104-N overlapping from respective point of views of the plurality of users collaborating in the computer simulated environment 102. Further, the method comprises assigning the determined overlapping entities to a particular computing device for processing the visual data for all the plurality of users. In an example, when multiple users are collaborating in the environment 102 and able to view one or more overlapping entities or scenes, then the method comprises automatically identifying the overlapping entities in multiple scenes to be rendered to multiple users having overlapping point of views. The overlapping entities are the clustered into a cluster which is then assigned to a computing device for processing. Once the overlapping entities are processed, then the rendering is done to the multiple users as needed. Advantageously, this method eliminates the need to do repetitive computations every time a scene is to be rendered that is common to multiple users.

In an embodiment, the method of assigning each cluster to a computing device from a plurality of computing devices 108-1 to 108-N based on an assignment model comprises detecting a failure of the computing device during processing of the cluster assigned for processing. In an example, in case the assigned edge device fails when the processing of the cluster is ongoing, then the anomaly maybe detected and reported to the processing unit. Further, the method comprises determining a progress of completion of the processing of the cluster assigned thereto. Further, the method comprises assigning another computing device available in the facility capable of resuming the completion of the processing of the cluster assigned thereto. Advantageously, in case of a failure of the edge device in the facility, the rendering of scene in the metaverse shall not be interrupted as the system re-assigns the cluster to the next available edge device such that seamless rendering of the scenes can be carried in the metaverse.

At step 310, each cluster of the one or more scenes received from each of the plurality of computing devices are synchronized in order to render the one or more scenes to the one or more users 112 interacting in the computer simulated environment 102. It is to be understood that the one or more clusters that are assigned to different computing device are processed individually and have to be synchronized in order to render a meaningful scene to the user viewing the scene. In an embodiment, the method of synchronizing the clusters of the one or more scenes comprises determining a scene association of each of the clusters transmitted from each of the plurality of computing devices based on a timestamp of each scene. Notably, each of the clusters when generated are associated with a particular scene identified as mentioned above. In an example, a first cluster may be associated with a time stamp t1, a second cluster may be associated with a time stamp t2, a third cluster may be associated with a time stamp t3. Also, a first scene may be associated with a timestamp t1, a second scene may be associated with a timestamp t2, and a third scene may be associated with a timestamp t3. In such a scenario, the first cluster is associated with the first scene, the second cluster is associated with the second scene, and the third cluster is associated with the third scene based on the timestamps t1, t2, and t3. Further, the method comprises arranging each of the clusters in the respective scenes based on coordinates of the one or more entities in each of the clusters and the determined scene association. Once the association of each of clusters is determined based on the timestamps, the next step is to determine the coordinates of each of the entities in the clusters. A cluster arrangement is made for each of the clusters being placed in the particular scene as per the real-world coordinate arrangement. Further, the method comprises synchronizing the one or more scenes to be rendered based on a timestamp of each scene. Herein, the one or more scenes comprises one or more associated cluster arrangement. Advantageously, the one or more scenes are synchronized in order to render a meaningful scene to the user.

In an embodiment, the method of synchronizing each cluster of the one or more scenes received from each of the plurality of computing devices 108-1 to 108-N in order to render the one or more scenes to the one or more users interacting in the computer simulated environment comprises generating metadata for each cluster of the one or more scenes processed by the computing devices. Herein, the metadata comprises one or more parameters that define the visual data pertaining to the one or more entities in the one or more clusters. The term "metadata" as used herein refers to additional information or descriptive data that is associated with the processed data of the one or more clusters. The metadata provides context, properties, or details about the visual data of the clusters, which is then used for rendering the scene in the metaverse. The metadata maybe stored in the image file or in an accompanying file or database. In an example, the metadata may include, but not limited to, Exchangeable Image File Format (Exif) data containing information about the camera settings and capture conditions of the particular cluster such as camera make and model, exposure settings (shutter speed, aperture, ISO), date and time of capture, GPS coordinates, and focal length; visual data properties metadata includes information about the cluster size (width and height in pixels or inches), color space (e.g., RGB, CMYK), bit depth (8-bit, 16-bit, etc.), and file format (JPEG, PNG, TIFF, etc.); descriptive keywords or tags assigned to the cluster that allow for easy categorization, organization, and retrieval of visual data based on specific attributes or content; editing or processing history of the clusters, including the sequence of modifications, filters applied, and adjustments made, which can aid in understanding the cluster evolution; camera calibration data which provides information about the camera's lens distortion, intrinsic parameters, and extrinsic parameters; cluster processing parameters if the cluster has undergone specific image processing operations (e.g., contrast enhancement, noise reduction, sharpening), metadata can store the parameters used for those operations; image annotations such as cluster annotations, comments, or captions associated with the cluster, providing additional context or information about specific regions or features within the cluster; and geospatial information such as latitude, longitude, altitude, and sometimes orientation data. Further, the method comprises synchronizing metadata received from each of the computing devices based on an arrival time and service rate of each metadata received from the computing devices. Advantageously, instead of synchronizing the processed visual data from each of the clusters, the processed visual data from each of clusters is converted into metadata and then is transmitted to the processing unit for synchronization and eventual rendering of the one or more scenes in the metaverse. Herein, metadata plays a crucial role in managing, organizing, and analyzing, and rendering large collections of images efficiently in the metaverse.

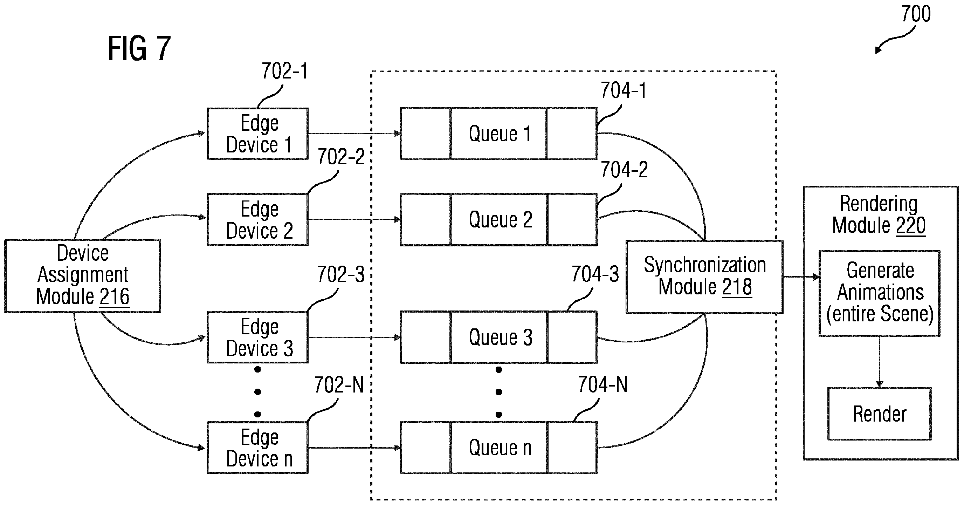

In an exemplary embodiment, the method of synchronizing each metadata pertaining to a cluster of the one or more scenes received from each of the plurality of edge devices in order to render the one or more scenes in the metaverse comprises determining a configuration of each of the assigned edge devices transmitting the metadata. Further, the method comprises calculating service time of the metadata received in the queue based on the determined configuration of each of the edge devices. Herein, the service time is the time taken for the edge device to process and handle the cluster processing request. In an example, service time includes the time required for processing, computation, data transmission, and any other tasks involved in serving the metadata. Further, the method comprises calculating arrival time of the metadata received in the queue based on the determined configuration of each of the edge devices. Herein, the arrival time is the time at which received metadata enters the queuing system to request service. The arrival time represents the moment when the metadata or request arrives at the apparatus for synchronization and joins the waiting queue. Further, the method comprises calculating the waiting time of each of the metadata arranged in the queue based on the calculated service time and the calculated arrival time. Further, the method comprises fetching the metadata from the queue according to the calculated waiting time of each of the metadata in the queue for synchronization. Further, the method comprises synchronizing the received metadata in order to render the scene to the particular user in the computer simulated environment. Advantageously, the method uses arrival time and service time of the metadata to analyze the queue, predict the behavior, and optimize the performance by determining the most optimal service capacity, staffing level, and processing strategies such that the one or more scenes can be rendered efficiently in the metaverse. An example, of synchronization of metadata received from computing devices is explained in detail in FIG 7. The method further comprises generating animations from the synchronized one or more clusters pertaining to the scene to be rendered to particularity users. Further, the method comprises rendering the generated animations to the particular user in the computer simulated environment.

Referring to FIG 7, illustrated is a flowchart depicting a workflow of method 700 of synchronizing metadata received from the computing devices, according to an embodiment of the present disclosure. As maybe be seen, the device assignment model 216 provides the clusters to each of the edge devices such as `edge device 1' 702-1, `edge device 2' 702-2, `edge device 3' 702-3, `edge device N' 702-N. Then, each of the edge devices 702-1 to 702-N process each of the clusters using one or more machine learning models and then convert the processed visual data into metadata. The metadata from each of the edge device 702-1 to 702-N is then transmitted to the synchronization module 218 that is configured to arrange the metadata into plurality into queue based on service time and arrival time of the edge devices 702-1 to 702-N. In an example, the metadata from edge device 1 namely 702-1 is placed in queue 1 namely 704-1, the metadata from edge device 2 namely 702-2 is placed in queue 2 namely 704-2; the metadata from edge device 3 namely 702-3 is placed in queue 3 namely 704-3, and the metadata from edge device N namely 702-N is placed in queue N namely 704-N. Furthermore, the synchronization module 218 synchronized all the metadata in a meaningful manner. Once the metadata is synchronized, the synchronized metadata is then transmitted to the rendering module 220 for generating animations from the metadata and then rendering the same to the one or more users in the metaverse.

Referring to FIG 4A, illustrated is a flowchart depicting steps of a method 400A for generating one or more clusters for the one or more entities interacting with one another, according to an embodiment of the present invention. At step 402, bounding boxes are generated for a set of entities from the one or more entities. Herein, the one or more entities are interacting with each other. By interaction is meant that the one or more entities are in close proximity with each other, and actions are being performed on the entities. In an example, a bounding box shall be generated around a person interacting with a machine on the workbench. At step 404, an overlap score of the generated bounding boxes is determined over multiple frames. Herein, the overlap score is determined based on area of overlap between one or more bounding boxes in comparison to area of union between the one or more bounding boxes. In an example, the overlap score is calculated using the intersection over union (IoU) technique. IoU measures the extent of overlap between the predicted bounding box and the ground truth bounding box of one or more objects. It determines the accuracy of entity localization in the one or more scenes. IoU is calculated by dividing the area of intersection between the predicted bounding box and the ground truth bounding box by the area of their union. Based on the evaluation, the overlap score is calculated for each of the bounding boxes. The resulting value represents the degree of overlap between the two bounding boxes, ranging from 0 to 1. A higher IoU score indicates a better alignment between the predicted and ground truth bounding boxes, implying improved object detection accuracy. At step 406, the frame pertaining to the set of entities with a highest value of the overlap score is determined. Notably, once the overlap scores for the one or more bounding boxes are calculated over multiple frames, the frame having the highest overlap score is selected. Advantageously, the calculation of overlap scores over multiple frames ensures that the bounding boxes have a high confidence of accuracy. At step 408, a first set of association graphs are generated for the set of entities having the highest overlap score. The first set of association graphs are the bounding boxes of the selected frame having the highest overlap score. At step 410, the one or more clusters are generated based on the generated first set of association graphs. Advantageously, the first association graphs are generated for the entities interacting with other, and hence the one or more clusters generated are comprises of one or more entities interacting with each other.

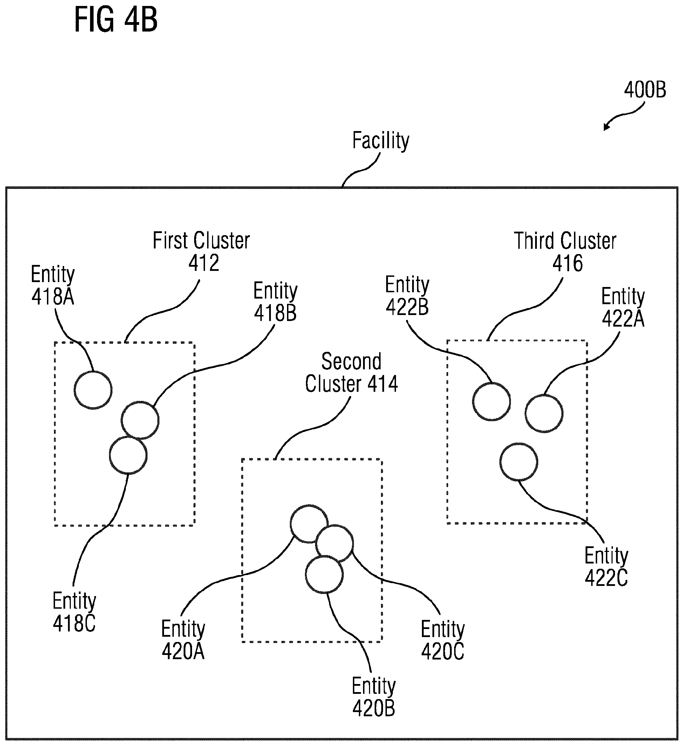

Referring to FIG 4B is an exemplary representation of one or more clusters for the one or more entities interacting with one another in the facility 400B, according to an embodiment of the present invention. As may be seen, three clusters are represented in the scene namely a first cluster "412", a second cluster "414" and a third cluster "416". The first cluster 412 is formed of the set of entities interacting with other 418A, 418B and 418C. The second cluster 414 is formed of the set of entities interacting with each other 420A, 420B and 420C. The third cluster 418 is formed of the set of entities interacting with each other 422A, 422B, and 422C.

Referring to FIG 5A is a flowchart depicting steps of a method 500A for generating one or more clusters for the one or more entities not interacting with one another, according to an embodiment of the present invention, according to another embodiment of the present invention. At step 502, bounding boxes for the set of entities is generated from the one or more entities. Herein, the set of entities not interacting with each other. The entities which are distant from other entities and do not perform any interaction with each other are then enclosed in a bounding box for further processing. In an example, if a worker is in an exclusive area with no interaction with other entities, then the bounding box is generated around the single worker. At step 504, relative distance score is calculated between each of the one or more bounding boxes over multiple frames. Herein, the relative distance score is the distance between the set of entities in each of the bounding boxes. The relative distance score is calculated between the bounding boxes having single entities that are not interacting with any other entities. Further, the relative distance score is calculated between the bounding boxes in order to determine if two separate non-interacting entities can be clustered together over multiple frames. At step 506, the frame pertaining to the set of entities with a least value of the relative distance score. It should be understood that the entities maybe moving towards each other or away from each other over multiple frames. Therefore, it observed over multiple frames which particular entities are in proximity to each other to be clustered together. Then, the frame with the least value of relative distance is chosen for clustering. At step 508 a second set of association graphs for the set of entities having the least relative distance score. It should be understood that association may be established between the single entities having the least relative distance and hence an association graph is generated for such entities. At step 510 the one or more clusters based on the generated second set of association graphs. It may be understood that multiple association graphs maybe generated based on relative distance calculation of multiple single entities. Furthermore, the clusters are determined based on the second set of association graphs.

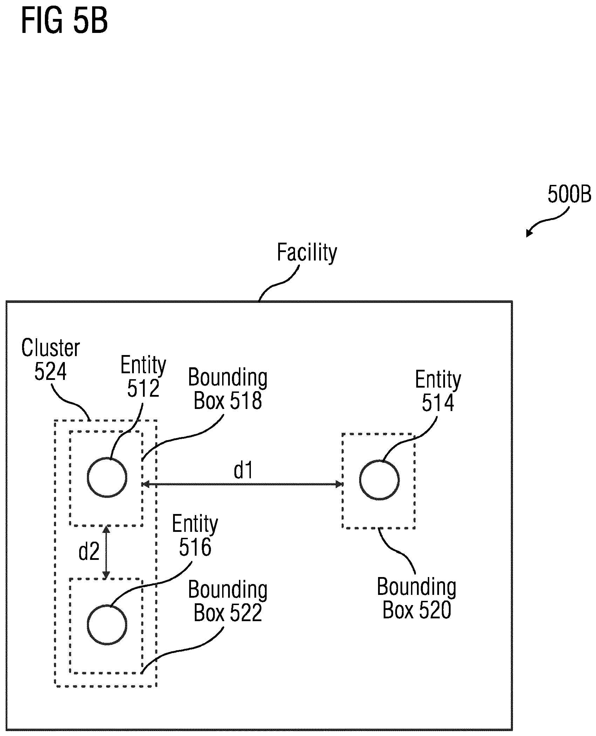

FIG 5B is an exemplary representation of one or more clusters for the one or more entities not interacting with one another in the facility 500B, according to an embodiment of the present invention. As maybe be seen the entities 512, 514, and 516 are not interacting with any other entities and hence enclosed in different bounding boxes 518, 520 and 522. Furthermore, distance 'd1' is calculated between the bounding box 518 and 520 over multiple frames and distance 'd2' is calculated between the bounding boxes 518 and 522 over multiple frames. In this scenario, as maybe seen the relative distance 'd2' is lesser than the relative distance 'd1', hence the cluster 524 is generated combining the bounding boxes 518 and 520.

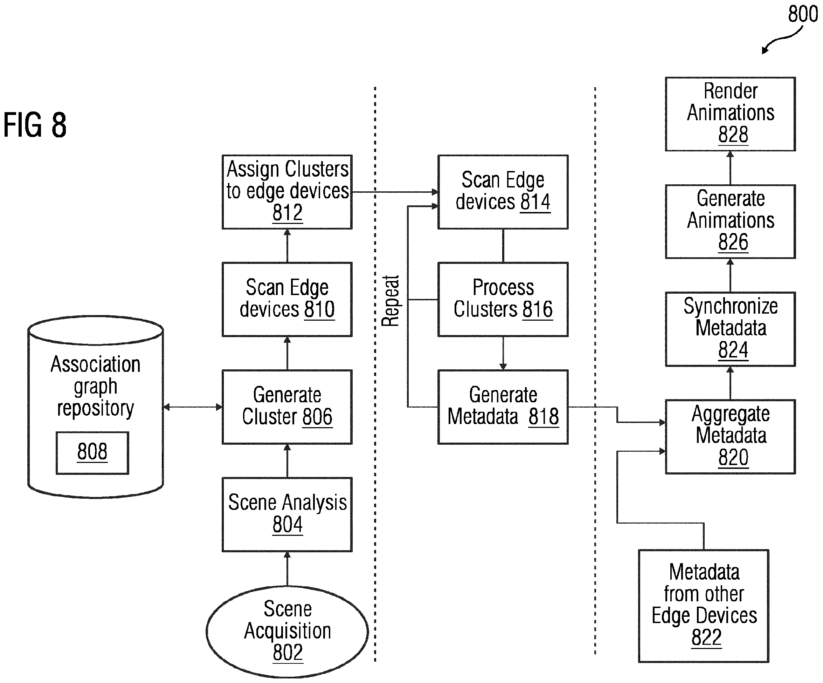

FIG 8 is a flowchart depicting a workflow of the method 800 for efficient rendering of one or more scenes to one or more users interacting in a computer simulated environment, according to an embodiment of the present invention. As maybe seen in the figure, at step 802 actual scene is captured via a camera. At step 804, scene analysis is done and one or more entities to be rendered are identified. At step 806, one or more clusters are generated based on association graphs stored in an association graph repository 808. At step 810, the facility is scanned for available edge devices and a configuration of each of edge devices is determined. At step 812, the one or more clusters are assigned to one or more edge device based on a device assignment model. At step 814, the one or more clusters and corresponding entity association are recevied by the respective edge devices. At step 816, the one or more clusters are processed, the entities are identified, tracked using one or more machine learning models in order to understand the scene. At step 818, metadata is generated for each of the one or more processed clusters. At step 820, the generated metadata is aggregated from each of the edge device, such as metadata from other edge devices received at step 822. At step 824, the metadata is synchronized in order to generate meaningful scenes. At step 826, the synchronized metadata is converted into animations. At step 828, the animations are rendered to the one or more users collaborating the metaverse.

The present invention provides a system and a method for efficiently rendering one or more scenes to one or more users interacting in a computer simulated environment. Advantageously, the invention provides a method for rendering real-world scenes to multiple users in the metaverse in an energy efficient manner. The present aids in rendering an energy efficient, seamless and near real-time metaverse. The present invention eliminates the need of a centralized processing system to process the real-time visual data to be redarned, thereby eliminating lags, delays, inconsistencies, single-point failures, and underperformances in the metaverse rendering. Furthermore, the invention aims at enhancing user experience of the users in the metaverse by enabling efficient rendering of scenes in the metaverse. Notably, the present invention relies on decentralized computing systems in the facility and hence making sure that the rendering of scenes in uninterrupted even in case of network failures.

While the present invention has been described in detail with reference to certain embodiments, it should be appreciated that the present disclosure is not limited to those embodiments. The foregoing examples have been provided merely for the purpose of explanation and are in no way to be construed as limiting of the present invention disclosed herein. While the invention has been described with reference to various embodiments, it is understood that the words, which have been used herein, are words of description and illustration, rather than words of limitation. Further, although the invention has been described herein with reference to particular means, materials, and embodiments, the invention is not intended to be limited to the particulars disclosed herein; rather, the invention extends to all functionally equivalent structures, methods and uses, such as are within the scope of the appended claims. Those skilled in the art, having the benefit of the teachings of this specification, may effect numerous modifications thereto and changes may be made without departing from the scope of the invention in its aspects.

### LIST OF REFERENCES

- 100A: system
- 102: computer simulated environment
- 104-1 to 104-N: one or more entities
- 105: data acquistion devices
- 106: communciation network
- 110: apparatus
- 100B: illustration of user vieweing one or more scenes
- 112: user
- 114: wearable device
- 202: one or more processing units
- 204: memory unit
- 206: module
- 208: data acquisition module
- 210: scene identification module
- 212: cluster generation module
- 216: device assignment module
- 218: synchronization module
- 220: rendering module
- 217: storage unit
- 222: database
- 224: input unit
- 226: output unit
- 228: bus
- 300: flowchart depicting steps of a method for efficiently rendering one or more scenes in a computer simulated environment
- 400A: flowchart depicting steps of a method for generating one or more clusters for the one or more entities interacting with one another
- 400B: facility
- 412: first cluster
- 414: second cluster
- 416: third cluster
- 418A: entity
- 418B: entity
- 418C: entity
- 420A: entity
- 420B: entity
- 420C: entity
- 422A: entity
- 422B: entity
- 422C: entity
- 500A: flowchart depicting steps of a method for generating one or more clusters for the one or more entities not interacting with one another
- 500B: facility
- 512: entity
- 514: entity
- 516: entity
- 518: bounding box
- 522: bounding box
- 524: cluster
- 600: method for assigning each cluster to a computing device
- for: processing visual data
- 700: method of synchronizing metadata received from the computing devices
- 702-1 to 702-N: edge devices
- 704-1 to 704-N: queue
- 800: method for efficient rendering of one or more scenes to one or more users interacting in a computer simulated environment

## Claims

1. A computer-implemented method for efficient rendering of one or more scenes to one or more users interacting in a computer simulated environment, the method comprises:
receiving, by a processing unit, visual data from one or more data acquisition devices configured to acquire data pertaining to one or more entities interacting in a facility, wherein the visual data is acquired from a point of view of the one or more users interacting in the computer simulated environment;
identifying, by the processing unit, one or more scenes and the one or more entities therein, to be rendered in the computer simulated environment for a particular user;
generating, by the processing unit, one or more clusters of each of the one or more entities identified from the one or more scenes to be rendered, wherein each cluster comprises a set of entities in relation with one another;
assigning, by the processing unit, each cluster in the one or more scenes to a computing device from a plurality of computing devices installed in the facility based on a device assignment model, wherein each of the plurality of computing devices are configured for processing the one or more clusters using one or more machine learning models; and
synchronizing, by the processing unit, each cluster of the one or more scenes received from each of the plurality of computing devices in order to render the one or more scenes to the one or more users interacting in the computer simulated environment.

2. The method according to claim 1, further comprising:
generating animations from the synchronized visual data pertaining to the scene to be rendered to the particular user;
rendering the generated animations to the particular user in the computer simulated environment.

3. The method according to claim 1 and claim 2, wherein synchronizing the clusters of the one or more scenes to be rendered comprises:
determining, by the processing unit, a scene association of each of the clusters transmitted from each of the plurality of computing devices based on a timestamp of each scene;
arranging, by the processing unit, each of the clusters in the respective scenes based on coordinates of the one or more entities in each of the clusters and the determined scene association; and
synchronizing, by the processing unit, the one or more scenes to be rendered based on a timestamp of each scene, wherein the one or more scenes comprises one or more associated cluster arrangement.

4. The method according to any of the preceding claims, wherein synchronizing each cluster of the one or more scenes received from each of the plurality of computing devices in order to render the one or more scenes to the one or more users interacting in the computer simulated environment comprises:
generating, by the processing unit, metadata for each cluster of the one or more scenes processed by the computing devices, wherein the metadata comprises one or more parameters that define the visual data pertaining to the one or more entities in the one or more clusters; and
synchronizing, by the processing unit, metadata received from each of the computing devices based on an arrival time and service rate of each metadata received from the computing devices.

5. The method according to any of the preceding claims, wherein generating clusters for each of the one or more entities identified from the scene to be rendered comprises
generating, by the processing unit, bounding boxes for a set of entities from the one or more entities, wherein the set of entities are interacting with each other;
determining, by the processing unit, an overlap score of the generated bounding boxes over multiple frames, wherein the overlap score is determined based on area of overlap between one or more bounding boxes in comparison to area of union between the one or more bounding boxes;
determining, by the processing unit, the frame pertaining to the set of entities with a highest value of the overlap score;
generating, by the processing unit, a first set of association graphs for the set of entities having the highest overlap score; and
generating, by the processing unit, the one or more clusters based on the generated first set of association graphs.

6. The method according to any of the claims 1 to 5, wherein generating clusters for each of the one or more entities identified from the scene to be rendered comprises:
generating, by the processing unit, bounding boxes for the set of entities from the one or more entities, wherein the set of entities not interacting with each other;
calculating, by the processing unit, relative distance score between each of the one or more bounding boxes over multiple frames, wherein the relative distance score is the distance between the set of entities in each of the bounding boxes;
determining, by the processing unit, the frame pertaining to the set of entities with a least value of the relative distance score;
generating, by the processing unit, a second set of association graphs for the set of entities having the least relative distance score; and
generating, by the processing unit, the one or more clusters based on the generated second set of association graphs.

7. The method according to any of the preceding claims, wherein assigning each cluster to a computing device from a plurality of computing devices based on a device assignment model comprises:
identifying, by the processing unit, the plurality of the computing devices installed in the facility;
determining, by the processing unit, configuration of each of the identified computing devices
listing, by the processing unit, each of one or more clusters to be rendered based on an order of rendering over a period of time;
determining, by the processing unit, a complexity score for each cluster to be rendered, wherein complexity score is a metric of the complexity of processing of the one or more clusters;
determining, by the processing unit, a priority score for each of the clusters to be rendered, wherein the priority score is determined based on the complexity score and a priority of order of rendering; and
assigning, by the processing unit, the cluster to be rendered to the computing device having optimal configuration based on the highest priority score of the cluster.

8. The method according to any of the preceding claims, wherein assigning each cluster to a computing device from a plurality of computing devices based on a device assignment model comprises:
assigning each set of clusters in the first association graph and the second association graph to a computing device based on a proximity of the user to the computing device.

9. The method according to any of the preceding claims, wherein assigning each cluster to a computing device from a plurality of computing devices based on a device assignment model comprises:
determining, by the processing unit, one or more new entities in a scene previously rendered in the computer simulated environment for a particular user, when the user initiates interaction with the one or more new entities in computer simulated environment; and
assigning, by the processing unit, the one or more new entities to the computing device assigned for the previously rendered scene for the user.

10. The method according to any of the preceding claims, wherein assigning each cluster to a computing device from a plurality of computing devices based on an assignment model comprises:
determining, by the processing unit, one or more entities overlapping from respective point of views of the plurality of users collaborating in the computer simulated environment; and
assigning, by the processing unit, the determined overlapping entities to a particular computing device for processing the visual data for all the plurality of users.

11. The method according to any of the preceding claims, wherein assigning each cluster to a computing device from a plurality of computing devices based on an assignment model comprises:
detecting, by the processing unit, a failure of the computing device during processing of the cluster assigned for processing;
determining, by the processing unit, progress of completion of the processing of the cluster assigned thereto;
assigning, by the processing unit, another computing device available in the facility capable of processing the cluster assigned thereto.

12. An apparatus for efficient rendering of one or more scenes to one or more users interacting in a computer simulated environment, the apparatus comprising:
one or more processing units;
a memory communicatively coupled to the one or more processing units, the memory comprising a module stored in the form of machine-readable instructions executable by the one or more processing units, wherein the module is configured to perform the method steps according to claims 1 to 11.

13. A system for efficient rendering of one or more scenes to one or more users interacting in a computer simulated environment, the system comprising:
a computer simulated collaborative environment rendering one or more scenes corresponding to real-world entities in a facility;
a plurality of computing devices communicatively coupled to the computer simulated environment, wherein the plurality of computing devices are installed in the facility; and
an apparatus according to claim 12, communicatively coupled to the plurality of computing devices and the computer simulated collaborative environment, wherein the apparatus is configured for efficiently render one or more scenes to one or more users interacting in a computer simulated environment, according to any of the method claims 1 to 11.

14. A computer-program product, having computer-readable instructions stored therein, that when executed by a processing unit, cause the processing unit to perform method steps according to any of the claims 1 to 11.

15. A computer readable medium on which program code sections of a computer program are saved, the program code sections being loadable into and/or executable in a system to make the system execute the method steps according to any of the claims 1 to 11 when the program code sections are executed in the system.
